# EUROPEAN PATENT APPLICATION

(11) **EP 2 602 940 A1**
(43) Date of publication of application: **12.06.2013**
(21) Application number: 11814066.4
(22) Date of filing: 22.06.2011
(51) Int. Cl.: H04B 1/707

(54) **MULTI-PATH SEARCHING METHOD AND MULTI-PATH SEARCHER**

(30) Priority: 06.08.2010 CN 201010248878
(71) Applicant: ZTE Corporation, Shenzhen, Guangdong 518057 (CN)
(72) Inventor: YAN, Xiaowei, Shenzhen Guangdong 518057 (CN); LI, Gen, Shenzhen Guangdong 518057 (CN)
(74) Representative: Carangelo, Pierluigi
(86) International application number: PCT/CN2011/076153
(87) International publication number: WO 2012/016483

(57) **Abstract**

The present invention discloses a multipath searching method and a multipath searcher. The multipath searching method comprises: judging that a terminal is in a Continuous Packet Connectivity (CPC) mode; determining an Activity Period (AP) number of an AP according to parameters of the CPC mode, wherein the parameters comprise: a UE_DTX_cycle_1, a UE_DTX_cycle_2, a UE_DPCCH_burst_1 and a UE_DPCCH_burst 2, and the UE_DTX_cycle_2 is greater than the UE_DTX_cycle_1; determining, in an integration period corresponding to the AP number, a correlation function of a Dedicated Physical Control Channel (DPCCH); and carrying out a multipath searching according to the correlation function. Through the present invention, the effect of ensuring the performance of the multipath searching under the condition of discontinuous DPCCH in the process of UE UL_DTX is achieved.

## Description

### Technical Field

The present invention relates to the field of communications, in particular to a multipath searching method and a multipath searcher in a Continuous Packet Connectivity (CPC) mode in a Wideband Code Division Multiple Access (WCDMA) system.

### Background

A CPC technology in a 3rd Generation Partnership Project (3GPP) protocol Rel-7 mainly comprises UE UL_DTX, UE DL_DRX and HS-SCCH less, wherein the UE UL_DTX and the UE DL_DRX implement uplink Discontinuous Transmission (DTX) and downlink Discontinuous Reception (DRX) respectively.

The 3GPP protocol stipulates that, for the UE UL_DTX, a discontinuous transmission mechanism is started when no Dedicated Channel (DCH) is existed and no data is transmitted in an Enhanced Dedicated Channel (E-DCH) within UE_Inactivity_Threshold continuous Transmission Time Intervals (TTIs). After the discontinuous transmission is started, there are two kinds of discontinuous transmission cycle periods: UE_DTX_cycle_1 and UE_DTX_cycle_2. If no data is transmitted in uplink and the discontinuous transmission is started, a UE transmits Dedicated Physical Control Channel (DPCCH) prefixes by taking UE_DTX_cycle_1 sub-frames as a cycle period, specifically transmitting DPCCH prefixes for UE_DPCCH_burst_1 sub-frames. If no data is transmitted in the E-DCH within Inactivity_Threshold_for_UE_DTX_cycle_2 continuous TTIs, the UE transmits DPCCH prefixes by taking UE_DTX_cycle_2 sub-frames as the cycle period, specifically transmitting DPCCH prefixes for UE_DPCCH_burst_2 sub-frames. That is to say, for the UE UL_DTX, the transmission of the DPCCH is discontinuous, but the period for the cycle transmission and the sub-frame length for each transmission are specified by certain parameters and are knowable.

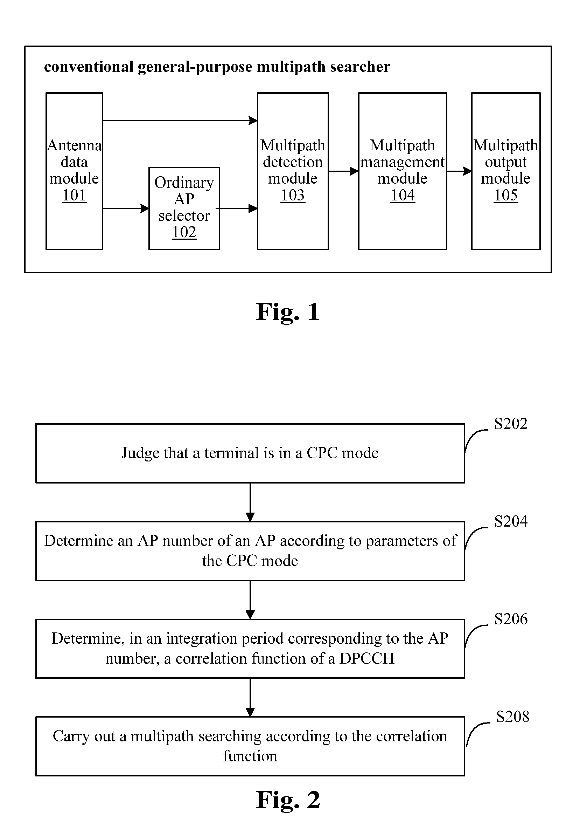

At present, a conventional multipath searcher is as shown in Fig. 1, comprising an antenna data module 101, an ordinary Activity Period (AP) selector 102, a multipath detection module 103, a multipath management module 104 and a multipath output module 105. The antenna data module 101 provides user antenna data and user parameter configuration for a terminal, wherein user parameters comprise a user scrambling code, a DPCCH spreading code, a DPCCH pilot symbol, a radius of a cell where a user is located, a type of a used searcher and the like. The ordinary AP selector 102 selects an AP number according to the radius of the cell where the user is located and the type of the used searcher. The multipath detection module 103 obtains a correlation function of the DPCCH by using the received antenna data, user scrambling code, DPCCH spreading code and DPCCH pilot symbol in an integration period corresponding to the AP number according to the selected AP number. The multipath management module 104 detects a peak value of a waveform of the correlation function to obtain multipath information according to the peak value and the correlation function, and combines the obtained multipath information. Subsequently, the multipath output module 105 outputs the combined multipath information to a receiver.

Generally, the following characteristics are presented when the conventional multipath searcher carries out multipath searching: 1) the searching is based on the DPCCH; 2) the searcher carries out the searching according to a certain period; and 3) searching resources are time-division-multiplexed among a plurality of users. For the first characteristic above, the multipath searching can be ensured if the DPCCH is transmitted continuously; however, the transmission of the DPCCH in the integration period is hardly ensured as the DPCCH is transmitted discontinuously in the process of the UE UL_DTX, as a result, the performance of the multipath searching is hardly ensured. The second and the third characteristics are generally implemented in an AP. The AP comprises an integration part and an idle part, wherein the integration part refers to an integration length in the AP, in which the multipath searcher occupies related integration resources, while the idle part refers to an idle length, in which no operation is carried out and the multipath searcher does not occupy related integration resources, so that the resources can be multiplexed by other searches. The sum of the length of the integration part and the length of the idle part is equal to the length of the AP; and the whole AP is a searching period of the multipath searcher, which carries out the multipath searching circularly according to the period. The multipath searcher of each user corresponds to one AP number, and the length of the integration part and the AP are determined as long as the AP number is determined. However, there may be no DPCCH in the AP under the condition of the UE UL_DTX; therefore, the performance of the multipath searching is hardly ensured.

Thus, it can be seen from the above that the conventional searching technology does not consider the multipath searching under the condition of discontinuous transmission of the DPCCH, and cannot ensure the existence of the DPCCH in the integration period, so that the performance of the multipath searching cannot be ensured in the process of the UE UL_DTX.

### Summary

The present invention provides a multipath searching method and a multipath searcher, which at least solve a problem that the performance of multipath searching cannot be ensured when a DPCCH is transmitted discontinuously.

In one aspect, the present invention provides a multipath searching method, comprising: judging that a terminal is in a Continuous Packet Connectivity (CPC) mode; determining an Activity Period (AP) number of an AP according to parameters of the CPC mode, wherein the parameters comprise: a UE_DTX_cycle_1, a UE_DTX_cycle_2, a UE_DPCCH_burst_1 and a UE_DPCCH_burst_2, wherein the UE_DTX_cycle_2 is greater than the UE_DTX_cycle_1; determining, in an integration period corresponding to the AP number, a correlation function of a Dedicated Physical Control Channel (DPCCH); and carrying out a multipath searching according to the correlation function.

Preferably, the step of determining the AP number of the AP according to the parameters of the CPC mode comprises: setting an integration length of the AP as a smaller one of the UE_DPCCH_burst_1 and the UE_DPCCH_burst_2; judging whether the UE_DTX_cycle_2 is greater than or equal to a commonly used AP; if it is judged that the UE_DTX_cycle_2 is greater than or equal to the commonly used AP, setting the AP as the UE_DTX_cycle_2; if it is judged that the UE_DTX_cycle_2 is less than the commonly used AP, setting the AP as N times of UE_DTX_cycle_2, wherein N is a natural number more than 1, and the N times of UE_DTX_cycle_2 is greater than and the most approximate to the commonly used AP; and looking up a set CPC parameter table to determine the AP number according to the integration length of the AP and the AP, wherein the CPC parameter table comprises a corresponding relation among a UE_DTX_cycle, a UE_DPCCH_burst and the AP number.

Preferably, the step of determining the AP number of the AP according to the parameters of the CPC mode comprises: setting an integration length of the AP as a smaller one of the UE_DPCCH_burst_1 and the UE_DPCCH_burst_2; setting the AP as the UE_DTX_cycle_2; and looking up a set CPC parameter table to determine the AP number according to the integration length of the AP and the AP, wherein the CPC parameter table comprises a corresponding relation among a UE_DTX_cycle, a UE_DPCCH_burst and the AP number.

Preferably, before the step of determining, in the integration period corresponding to the AP number, the correlation function of the DPCCH, the method further comprises: determining a discarding counting threshold according to the AP number and the UE_DTX_cycle_2; and the step of carrying out the multipath searching according to the correlation function comprises: judging, according to the discarding counting threshold, whether to process the correlation function, and if it is judged to process the correlation function, carrying out the multipath searching according to the correlation function.

Preferably, the step of determining the discarding counting threshold according to the AP number and the UE_DTX_cycle_2 comprises: judging whether the AP corresponding to the AP number is less than the UE_DTX_cycle_2 of the CPC mode; if it is judged that the AP corresponding to the AP number is less than the UE_DTX_cycle_2 of the CPC mode, setting the discarding counting threshold as a quotient obtained by dividing the UE_DTX_cycle_2 by the AP corresponding to the AP number; and if it is judged that the AP corresponding to the AP number is larger than or equal to the UE_DTX_cycle_2 of the CPC mode, setting the discarding counting threshold as 1.

Preferably, the step of judging, according to the discarding counting threshold, whether to process the correlation function comprises: updating a searching counting variable, wherein the searching counting variable is used for counting times of the multipath searching; carrying out a modular operation on the updated searching counting variable and the discarding counting threshold; and setting a value of the searching counting variable as a result of the modular operation, judging whether the value of the searching counting variable is 0, and if it is judged that the value of the searching counting variable is 0, processing the correlation function.

Preferably, the step of updating the searching counting variable comprises: setting the searching counting variable as 0 when the terminal switches from the UE_DTX_cycle_1 to the UE_DTX_cycle_2 of the CPC mode; and updating the searching counting variable according to the times of the multipath searching.

According to another aspect, the present invention provides a multipath searcher, comprising: a judgment module, configured to judge that a terminal is in a Continuous Packet Connectivity (CPC) mode; a discontinuous AP selector, configured to determine an Activity Period (AP) number of an AP according to parameters of the CPC mode, wherein the parameters comprise: a UE_DTX_cycle_1, a UE_DTX_cycle_2, a UE_DPCCH_burst_1 and a UE_DPCCH_burst_2, wherein the UE_DTX_cycle_2 is greater than the UE_DTX_cycle_1; a multipath detection module, configured to determine, in an integration period corresponding to the AP number, a correlation function of a Dedicated Physical Control Channel (DPCCH); and a multipath management module, configured to carry out a multipath searching according to the correlation function.

Preferably, the discontinuous AP selector comprises: an integration length module, configured to set an integration length of the AP as a smaller one of the UE_DPCCH_burst_1 and the UE_DPCCH_burst_2; an AP module, configured to judge whether the UE_DTX_cycle_2 is greater than or equal to a commonly used AP, set the AP as the UE_DTX_cycle_2 if it is judged that the UE_DTX_cycle_2 is greater than or equal to the commonly used AP, and set the AP as N times of UE_DTX_cycle_2 if it is judged that the UE_DTX_cycle_2 is less than the commonly used AP, wherein N is a natural number more than 1, and the N times of UE_DTX_cycle_2 is greater than and the most approximate to the commonly used AP; and a determining module, configured to look up a set CPC parameter table to determine the AP number according to the integration length of the AP and the AP, wherein the CPC parameter table comprises a corresponding relation among a UE_DTX_cycle, a UE_DPCCH_burst and the AP number.

Preferably, the discontinuous AP selector further comprises: a counting threshold module, configured to determine a discarding counting threshold according to the AP number and the UE_DTX_cycle_2; the multipath management module is configured to judge, according to the discarding counting threshold, whether to process the correlation function, and carry out the multipath searching according to the correlation function if it is judged to process the correlation function.

Preferably, the counting threshold module comprises: a threshold judgment module, configured to judge whether the AP corresponding to the AP number is less than the UE_DTX_cycle_2 of the CPC mode; and a setting module, configured to set the discarding counting threshold as a quotient obtained by dividing the UE_DTX_cycle_2 by the AP corresponding to the AP number if a judgment result of the threshold judgment module is that the AP corresponding to the AP number is less than the UE_DTX_cycle_2 of the CPC mode, and set the discarding counting threshold as 1 if the judgment result of the threshold judgment module is that the AP corresponding to the AP number is larger than or equal to the UE_DTX_cycle_2 of the CPC mode.

Preferably, the multipath management module comprises: an updating module, configured to update a searching counting variable, wherein the searching counting variable is used for counting times of the multipath searching; a modular operation module, configured to carry out a modular operation on the updated searching counting variable and the discarding counting threshold; and an execution module, configured to set a value of the searching counting variable as a result of the modular operation, judge whether the value of the searching counting variable is 0, and process the correlation function if it is judged that the value of the searching counting variable is 0.

Through the present invention, when a user terminal is in the CPC mode, the AP number is selected according to different CPC parameters to further determine a proper AP and a proper AP integration length, so that the transmission of the DPCCH is ensured in the integration period of the multipath searching and the problem of poor multipath searching performance of the conventional multipath searching in the CPC mode is solved. Therefore, the effect of ensuring the performance of the multipath searching under the condition of the discontinuous DPCCH in the process of the UE UL_DTX is achieved.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram showing the structure of a multipath searcher according to related arts;
Fig. 2 is a flowchart showing the steps of a multipath searching method according to a first embodiment of the present invention;
Fig. 3 is a flowchart showing the steps of a multipath searching method according to a second embodiment of the present invention;
Fig. 4 is a flowchart showing the steps of a multipath searching method according to a third embodiment of the present invention;
Fig. 5 is a flowchart showing the discarding processing for a correlation function of the multipath searching according to an embodiment of the present invention;
Fig. 6 is a block diagram showing the structure of a multipath searcher according to a fourth embodiment of the present invention; and
Fig. 7 is a schematic diagram showing the structure of a multipath searcher according to a fifth embodiment of the present invention.

### Detailed Description of the Embodiments

The present invention will be described in detail below with reference to the drawings and embodiments. It should be noted that, in the case of no conflict, the embodiments of the present invention and features therein can be combined with each other.

### First embodiment

Fig. 2 is a flowchart showing the steps of a multipath searching method according to the first embodiment of the present invention. The multipath searching method comprises the following steps.

Step S202: It is judged that a terminal is in a CPC mode.

In the step, a multipath searcher can be used for judging whether the terminal is in the CPC mode.

Step S204: An AP number of an AP is determined according to parameters of the CPC mode.

In the step, the parameters of the CPC mode comprise: a UE_DTX_cycle_1, a UE_DTX_cycle_2, a UE_DPCCH_burst_1 and a UE_DPCCH_burst_2, wherein the UE_DTX_cycle_2 is greater than the UE_DTX_cycle_1. The parameters belong to parameters in the 3GPP Rel-7 and have the same meanings as those of the parameters in the protocol.

Step S206: A correlation function of a DPCCH is determined in an integration period corresponding to the AP number.

In the step, the correlation function of the DPCCH in the embodiment can be determined by a method same as the method for determining the correlation function of the conventional multipath searcher.

Step S208: A multipath searching is carried out according to the correlation function.

In the step, a multipath searching method same as that of the conventional multipath searcher can be adopted. For example, the multipath searcher detects a peak value of a waveform of the correlation function to obtain multipath information with a lower precision according to the correlation function and the detected peak value, and then carries out interpolation on the obtained multipath to improve the precision of the multipath, further adjusts a position of a search window and combines the obtained multipath information with historical multipath information to obtain a final multipath set.

The multipath searching in the related arts does not consider the UE UL_DTX in the CPC mode, therefore, the DPCCH may be discontinuous in the integration period of the multipath searching, as a result, the searching performance can not be ensured. Through the embodiment, when a user terminal is in the CPC mode, the AP number is selected according to different CPC parameters to determine a proper AP and a proper AP integration length, so that the transmission of the DPCCH in the integration period of the multipath searching is effectively ensured, and accordingly, the performance of the multipath searching is ensured.

### Second embodiment

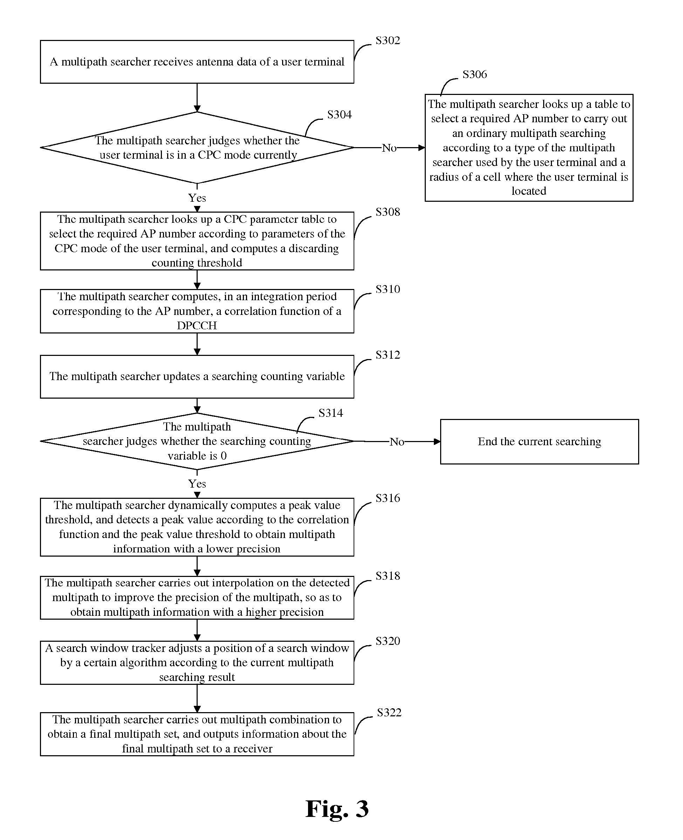

Fig. 3 is a flowchart showing the steps of a multipath searching method according to the second embodiment of the present invention. The multipath searching method comprises the following steps.

Step S302: A multipath searcher receives antenna data of a user terminal.

Step S304: The multipath searcher judges whether the user terminal is in a CPC mode currently, if the user terminal is not in a CPC mode, Step S306 is executed and an AP number for multipath searching is selected by an ordinary AP selector; and if the user terminal is in a CPC mode, Step S308 is executed and the AP number for the multipath searching is selected by a discontinuous AP selector.

Step S306: The multipath searcher looks up a table to select a required AP number according to a type of the multipath searcher used by the user terminal and a radius of a cell where the user terminal is located, and an ordinary multipath searching is carried out.

In the step, a conventional method for selecting the AP number by the multipath searcher can be adopted. The table to be looked up is a three-dimensional table, of which three dimensions are a searcher type, a cell radius and an AP number respectively.

Step S308: The multipath searcher looks up a CPC parameter table to select the required AP number according to the parameters, i.e. a UE_DTX_cycle_1, a UE_DTX_cycle_2, a UE_DPCCH_burst_1 and a UE_DPCCH_burst_2 of the CPC mode of the user terminal, and computes a discarding counting threshold.

In the step, the parameters used for the lookup can further comprise a commonly used AP integration length and a commonly used AP. The CPC parameter table is a three-dimensional table, of which three dimensions are a UE_DPCCH_burst, a UE_DTX_cycle and an AP number respectively. For one AP number, the UE_DPCCH_burst can be UE_DPCCH_burst_1 or UE_DPCCH_burst_2, and the UE_DTX_cycle can be UE_DTX_cycle_1 or UE_DTX_cycle_2.

Step S310: According to the selected AP number, the multipath searcher computes, in an integration period corresponding to the AP number, a correlation function of a DPCCH by using received antenna data, and a scrambling code, a DPCCH spreading code and a DPCCH pilot symbol corresponding to the user terminal.

In the step, the multipath searcher can compute the correlation function of the DPCCH by using the received antenna data, and the scrambling code, the DPCCH spreading code and the DPCCH pilot symbol corresponding to the user terminal by the same method as that of the prior art, thereby needing no further description.

Step S312: The multipath searcher updates a searching counting variable, starts a new searching and sets the searching counting variable as 0 as soon as switching from the UE_DTX_cycle_1 to the UE_DTX_cycle_2, adds 1 to the searching counting variable in each subsequent searching, carries out a modular operation on the searching counting variable to which 1 is added and the discarding counting threshold, and then assigns the value obtained by the modular operation to the searching counting variable.

In the step, the searching counting variable is used for counting times of the multipath searching.

Step S314: The multipath searcher judges whether the searching counting variable is 0, if the searching counting variable is 0, Step S316 is executed; otherwise, the current searching is ended.

Step S316: The multipath searcher dynamically computes a peak value threshold, and detects a peak value according to the correlation function and the peak value threshold to obtain multipath information with a lower precision.

During the multipath searching, a pilot signal in the DPCCH is used for estimating a multipath delay, i.e., correlation based on different delays is performed between a received baseband signal, and a known scrambling code and pilot symbol, to obtain the correlation function. A peak of the correlation function appears when a correlation delay and a multipath delay are the same and is found in the waveform of the correlation function, and the delay corresponding to the peak which is greater than a certain threshold is the multipath delay.

Step S318: The multipath searcher carries out interpolation on the detected multipath to improve the precision of the multipath, so as to obtain multipath information with a higher precision.

Step S320: A search window tracker of the multipath searcher adjusts the position of the search window by a certain algorithm according to the current multipath searching result, to ensure that the search window can still cover the multipath of most of the energy along with the drifting of the multipath.

Step S322: The multipath searcher carries out multipath combination to combine a current detected multipath set with a historical multipath set to obtain a final multipath set, and outputs information about the final multipath set to a receiver.

Those skilled in the art can adopt a method same as the conventional multipath searching method to implement Steps S316 to S322.

In the embodiment, when the user terminal is in the CPC mode, the AP number is selected according to different CPC parameters to ensure the transmission of the DPCCH in the integration period of the multipath searcher. Moreover, a same AP number is adopted for searching in the whole CPC period so as to ensure the performance of the multipath searching of the multipath searcher in the CPC mode, overcome the defect of poor searching performance of the conventional multipath searcher in the CPC mode, and lower the searching complexity.

### Third embodiment

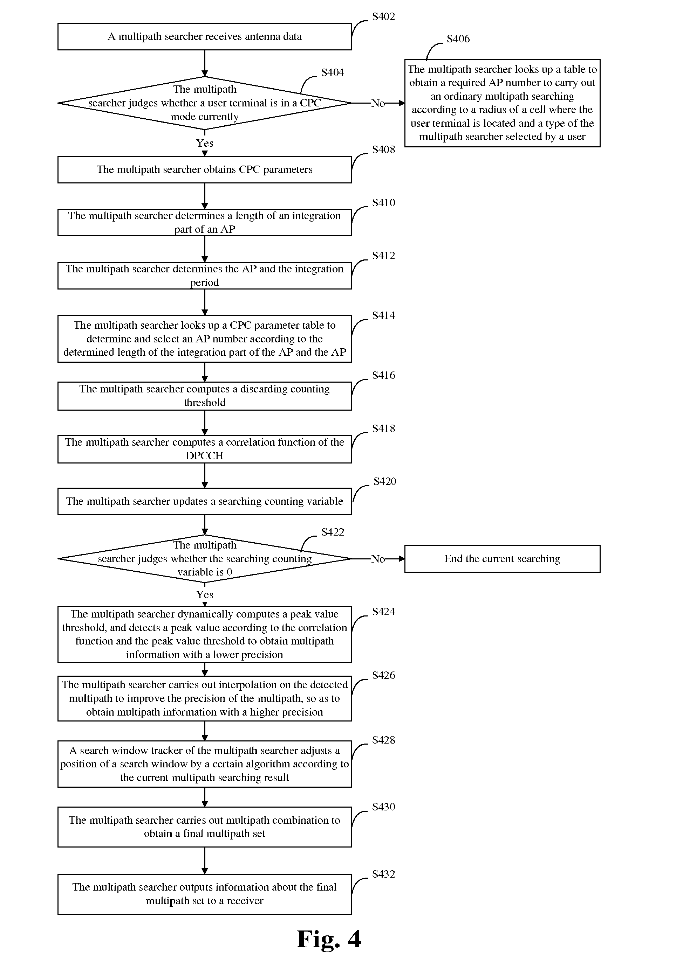

Fig. 4 is a flowchart showing the steps of a multipath searching method according to the third embodiment of the present invention. The multipath searching method comprises the following steps.

Step S402: A multipath searcher receives antenna data.

Step S404: The multipath searcher judges whether a user terminal is in a CPC mode currently, if the user terminal is not in a CPC mode, Step S406 is executed; and if the user terminal is in a CPC mode, Step S408 is executed.

Step S406: The multipath searcher looks up a table to obtain a required AP number according to a radius of a cell where the user terminal is located and a type of the multipath searcher selected by a user, and an ordinary multipath searching is carried out.

Step S408: The multipath searcher obtains CPC parameters, comprising a UE_DTX_cycle_1, a UE_DTX_cycle_2, a UE_DPCCH_burst_1 and a UE_DPCCH_burst_2.

Step S410: The multipath searcher determines a length of an integration part of an AP according to the UE_DPCCH_burst_1 and the UE_DPCCH_burst_2.

In the embodiment, the smaller one of the UE_DPCCH_burst_1 and the UE_DPCCH_burst_2 is taken as the length of the integration part. Optionally, the multipath searcher can also take the smallest one of the UE_DPCCH_burst_1, the UE_DPCCH_burst_2 and an ordinary integration length as the length of the integration part, and generally, the ordinary integration length can be 6 slots.

Step S412: The multipath searcher determines the AP.

Because the UE_DTX_cycle_2 is usually an integral multiple of the UE_DTX_cycle_1, in order to ensure that a same AP number can be adopted when switching between the UE_DTX_cycle_1 and the UE_DTX_cycle_2 in the whole CPC period, it is necessary to ensure that the length of the adopted AP is a multiple of the UE_DTX_cycle_1 and a multiple or a sub-multiple of the UE_DTX_cycle_2.

In the embodiment, the AP is determined by the following method to ensure the constraint condition above. A method is to directly take the UE_DTX_cycle_2 as the AP. This method is simple and easy to implement, however, a lot of searching resources may be consumed when the UE_DTX_cycle_2 is small. Therefore, the method is further optimized in another method. In the method, it is judged whether the UE_DTX_cycle_2 is greater than or equal to a commonly used AP; if the UE_DTX_cycle_2 is greater than or equal to the commonly used AP, the UE_DTX_cycle_2 is taken as the AP; otherwise, an integer which is an integral multiple of the UE_DTX_cycle_2 and is greater than and the most approximate to the commonly used AP is taken as the AP. The AP obtained in this way is suitable for the switchover between the UE_DTX_cycle_1 and the UE_DTX_cycle_2 in the CPC mode; but a new searching is started as soon as the UE_DTX_cycle_1 switches to the UE_DTX_cycle_2.

Step S414: The multipath searcher looks up a CPC parameter table to determine and select an AP number according to the determined length of the integration part of the AP and the determined AP.

In the step, the CPC parameter table comprises a corresponding relation among the UE_DTX_cycle, the UE_DPCCH_burst and the AP number. For one AP number, the UE_DTX_cycle can be UE_DTX_cycle_1 or UE_DTX_cycle_2, and the UE_DPCCH_burst can be UE_DPCCH_burst_1 or UE_DPCCH_burst_2.

Step S416: The multipath searcher computes a discarding counting threshold.

In the step, the multipath searcher can determine the discarding counting threshold according to the determined AP number and the UE_DTX_cycle_2. For example, when a DPCCH is transmitted according to the parameter UE_DTX_cycle_2 in the CPC mode, if the AP corresponding to the selected AP number is less than the UE_DTX_cycle_2, the discarding counting threshold is set as a quotient obtained by dividing the UE_DTX_cycle_2 by the AP corresponding to the AP number; otherwise, the discarding counting threshold is set as 1.

The correlation function of the DPCCH is processed differently by setting the discarding counting threshold, so as to improve the performance of the multipath searching and the system efficiency.

Step S418: The multipath searcher computes, in the integration period according to the selected AP number, a correlation function of the DPCCH by using received antenna data, and a scrambling code, a DPCCH spreading code and a DPCCH pilot symbol corresponding to the user terminal.

Step S420: The multipath searcher updates a searching counting variable.

In the step, the searching counting variable is used for counting times of the multipath searching. Information about the times of the multipath searching is obtained in time by updating the searching counting variable.

A new searching is started and the searching counting variable is set as 0 as soon as the terminal switches from the UE_DTX_cycle_1 to the UE_DTX_cycle_2. 1 is added to the variable value in each subsequent searching, the variable value to which 1 is added and the discarding counting threshold are subjected to a modular operation, and then, the value obtained by the modular operation is assigned to the searching counting variable.

Step S422: The multipath searcher judges whether the searching counting variable is 0, if the searching counting variable is 0, Step S424 is executed; otherwise, the searching is ended.

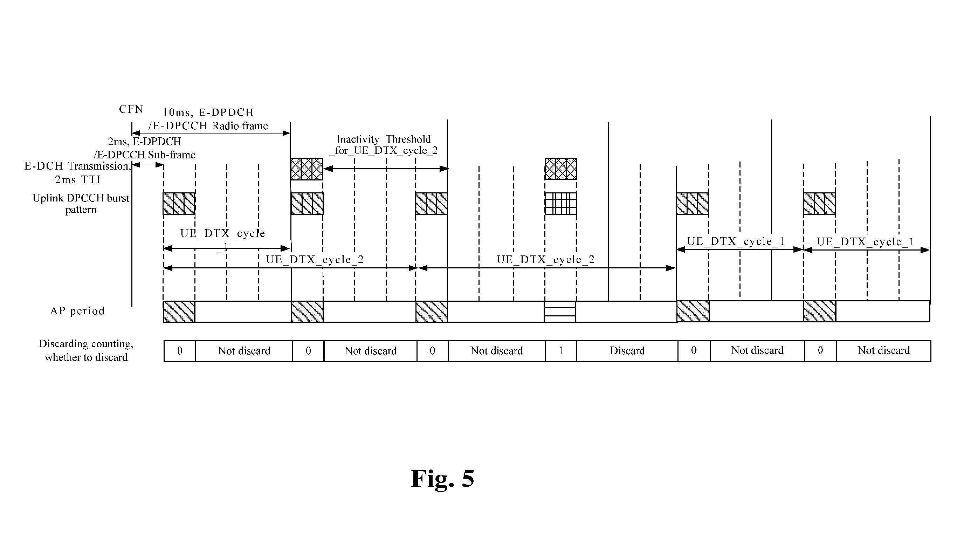

The selected AP may be a common divisor less than the UE_DTX_cycle_2, so it is possible that no DPCCH is transmitted in some integration periods in the AP when the DPCCH is transmitted in the CPC mode according to the UE_DTX_cycle_2; at the moment, it is necessary to discard the correlation function obtained by integration under such condition. The discarding of the correlation function can be implemented by searching counting or peak-to-average ratio judgement of the correlation function and other methods. In the embodiment, a searching counting way is adopted, that is, the correlation function is discarded when the searching counting variable is not 0, and the specific discarding flow is as shown in Fig. 5. In Fig. 5, the UE_DTX_cycle_1 is equal to the AP, and the UE_DTX_cycle_2 is twice the UE_DTX_cycle_1. When switching from the UE_DTX_cycle_1 to the UE_DTX_cycle_2, multipath management and subsequent processing are carried out when the searching counting variable is 0, and the correlation function output by the searching multipath detection is discarded when the searching counting variable is 1.

Step S424: The multipath searcher dynamically computes a peak value threshold, and detects a peak value according to the correlation function and the peak value threshold to obtain multipath information with a lower precision.

Step S426: The multipath searcher carries out interpolation on the detected multipath to improve the precision of the multipath, so as to obtain multipath information with a higher precision.

Step S428: A search window tracker of the multipath searcher adjusts the position of the search window by a certain algorithm according to the current multipath searching result, to ensure that the search window can still capture most of multipath energy along with the drifting of the multipath.

Step S430: The multipath searcher carries out multipath combination to combine a current detected multipath set with a historical multipath set to obtain a final multipath set.

Step S432: The multipath searcher outputs information about the final multipath set to a receiver.

### Fourth embodiment

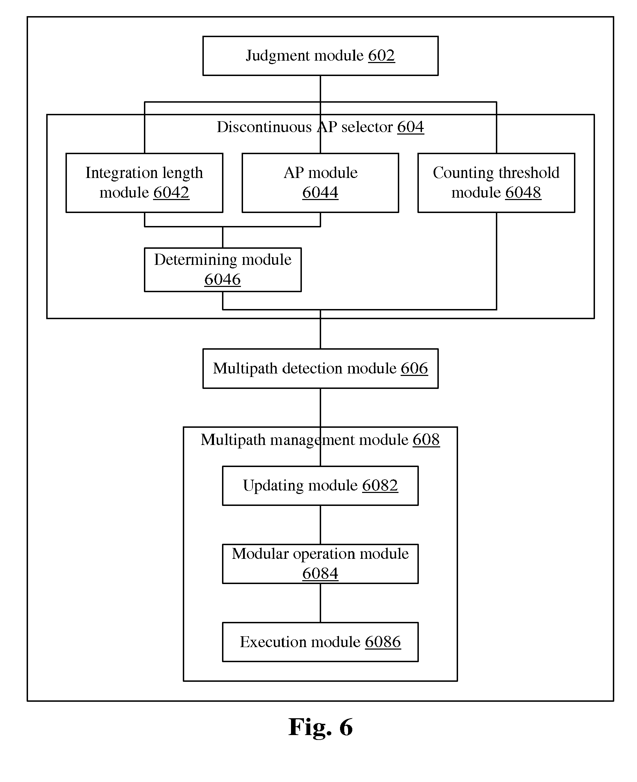

Fig. 6 is a block diagram showing the structure of a multipath searcher according to the fourth embodiment of the present invention. The multipath searcher comprises:
a judgment module 602, configured to judge that a terminal is in a CPC mode; a discontinuous AP selector 604, configured to determine an AP number of an AP according to parameters of the CPC mode, wherein the parameters comprise: a UE_DTX_cycle_1, a UE_DTX_cycle_2, a UE_DPCCH_burst_1 and a UE_DPCCH_burst 2, wherein the UE_DTX_cycle_2 is greater than the UE_DTX_cycle_1; a multipath detection module 606, configured to determine, in an integration period corresponding to the AP number, a correlation function of a DPCCH; and a multipath management module 608, configured to carry out a multipath searching according to the correlation function.

Preferably, the discontinuous AP selector 604 comprises: an integration length module 6042, configured to set an integration length of the AP as a smaller one of the UE_DPCCH_burst_1 and the UE_DPCCH_burst_2; an AP module 6044, configured to judge whether the UE_DTX_cycle_2 is greater than or equal to a commonly used AP, set the AP as the UE_DTX_cycle_2 if the UE_DTX_cycle_2 is greater than or equal to the commonly used AP, and set the AP as N times of UE_DTX_cycle_2 if the UE_DTX_cycle_2 is less than the commonly used AP, wherein N is a natural number more than 1 and the N times of UE_DTX_cycle_2 is greater than and the most approximate to the commonly used AP; and a determining module 6046, configured to look up a set CPC parameter table to determine the AP number according to the integration length of the AP and the AP, wherein the CPC parameter table comprises a corresponding relation among a UE_DTX_cycle, a UE_DPCCH_burst and the AP number.

Preferably, the AP module 6044 can be further configured to directly set the AP as the UE_DTX_cycle_2.

Preferably, the discontinuous AP selector 604 further comprises: a counting threshold module 6048, configured to determine a discarding counting threshold according to the AP number and the UE_DTX_cycle_2. The multipath management module 608 is configured to judge, according to the discarding counting threshold, whether to process the correlation function, and carry out the multipath searching according to the correlation function if it is judged to process the correlation function.

Preferably, the counting threshold module 6048 comprises: a threshold judgment module, configured to judge whether the AP corresponding to the AP number is less than the UE_DTX_cycle_2 of the CPC mode; and a setting module, configured to set the discarding counting threshold as a quotient obtained by dividing the UE_DTX_cycle_2 by the AP corresponding to the AP number if the judgment result of the threshold judgment module is that the AP corresponding to the AP number is less than the UE_DTX_cycle_2 of the CPC mode, and set the discarding counting threshold as 1 if the judgment result of the threshold judgment module is that the AP corresponding to the AP number is greater than or equal to the UE_DTX_cycle_2 of the CPC mode.

Preferably, the multipath management module 608 comprises: an updating module 6082, configured to update a searching counting variable which is used for counting times of the multipath searching; a modular operation module 6084, configured to carry out a modular operation on the updated searching counting variable and the discarding counting threshold; and an execution module 6086, configured to set a value of the searching counting variable as a result of the modular operation, judge whether the value of the searching counting variable is 0, and process the correlation function if the value of the searching counting variable is 0.

Preferably, the updating module 6082 is further configured to set the searching counting variable as 0 when the terminal switches from the UE_DTX_cycle_1 to the UE_DTX_cycle_2, and update the searching counting variable according to the times of the multipath searching.

### Fifth embodiment

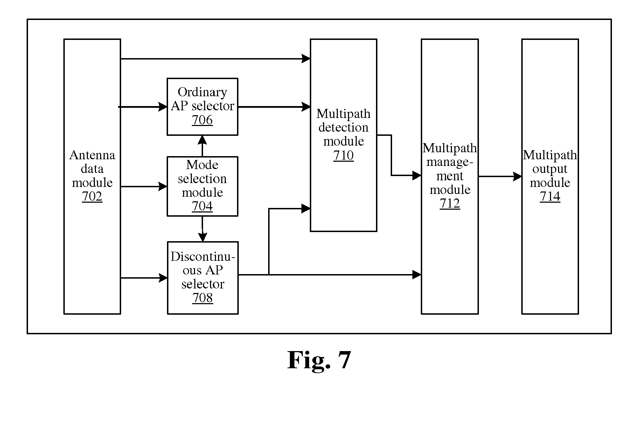

Fig. 7 is a schematic diagram showing the structure of a multipath searcher according to the fifth embodiment of the present invention.

The embodiment is a preferable structure of a multipath searcher, comprising an antenna data module 702, a mode selection module 704, an ordinary AP selector 706, a discontinuous AP selector 708, a multipath detection module 710, a multipath management module 712 and a multipath output module 714. In the embodiment, the mode selection module 704 and the discontinuous AP selector 708 are added based on the multipath searcher shown in Fig. 1; and at the same time, the functions of a plurality of modules are further improved.

The antenna data module 702 is configured to provide antenna data and parameters required by the multipath searching, wherein the parameters comprise a user terminal scrambling code, a DPCCH spreading code, a DPCCH pilot symbol, a radius of a cell where a user is located, a type of a used searcher, whether in a CPC mode, and a UE_DTX_cycle_1, a UE_DTX_cycle_2, a UE_DPCCH_burst_1 and a UE_DPCCH_burst_2 in the CPC mode. The antenna data, the user terminal scrambling code, the DPCCH spreading code and the DPCCH pilot symbol are used by the multipath detection module 710; and the radius of the cell where the user is located and the type of the used searcher are used by the ordinary AP selector 706. The parameter, whether in a CPC mode, is provided to the mode selection module 704 for mode selection; and the UE_DTX_cycle_1, the UE_DTX_cycle_2, the UE_DPCCH_burst_1 and the UE_DPCCH_burst_2 in the CPC mode are used by the discontinuous AP selector 708.

The mode selection module 704 is configured to judge whether the current user terminal is in the CPC mode, select the ordinary AP selector 706 if the user terminal is not in the CPC mode, and select the discontinuous AP selector 708 if the user terminal is in the CPC mode.

The ordinary AP selector 706 is configured to select, by ordinary lookup, an AP number to be used by the current user terminal according to the radius of the cell where the user terminal is located and the type of the multipath searcher used by the user.

The discontinuous AP selector 708 is configured to select, by looking up a CPC parameter table, an AP number when the DPCCH is discontinuous according to the UE_DTX_cycle_1, the UE_DTX_cycle_2, the UE_DPCCH_burst_1 and the UE_DPCCH_burst_2 in the CPC mode, a commonly used integration length and a commonly used AP, compute a discarding counting threshold, and transmit the AP number and the discarding counting threshold to the multipath detection module 710 and the multipath management module 712 respectively.

According to the selected AP number, the multipath detection module 710 carries out correlation computation in the integration period by using the received antenna data and the scrambling code, the DPCCH spreading code and the DPCCH pilot symbol corresponding to the user terminal, to obtain a coherence integration result (in a form of a complex number) of the DPCCH. Then, the multipath detection module 710 computes the amplitude or power of the coherence integration result of the DPCCH and accumulates results of a plurality of time slots, to obtain incoherence integration result of the DPCCH, i.e., the correlation function of the DPCCH.

The multipath management module 712 has the main functions of peak value detection, multipath interpolation, search window tracking and multipath combination. The peak value detection is to dynamically compute a peak value threshold, and detect a peak value according to the correlation function and the threshold to obtain multipath information with a lower precision. The multipath interpolation is to carry out interpolation on the detected peak value to improve the precision of the multipath and obtain multipath information with a higher precision. The search window tracker adjusts the position of the search window by a certain algorithm according to the current multipath searching result to ensure that the search window can still capture most of multipath energy along with the drifting of the multipath. The multipath combination is to combine the current detected multipath set with a historical multipath set to obtain a final multipath set. In addition, the module further carries out discarding counting, starts a new searching and sets the searching counting variable as 0 when switching from the UE_DTX_cycle_1 to the UE_DTX_cycle_2, adds 1 to the variable value in each subsequent searching, carries out a modular operation on the variable value to which 1 is added and the discarding counting threshold, and assigns the value obtained by the modular operation to the searching counting variable. If the value of the searching counting variable is 0, the multipath management module 712 carries out subsequent processing on the correlation function sent from the multipath detection module 710; otherwise, no processing is carried out.

The multipath output module 714 outputs information about the final multipath set to a receiver.

Through the embodiment, the defect of poor searching performance of the conventional multipath searching method when the DPCCH is transmitted discontinuously is overcome. Meanwhile, the idle period in the AP can be utilized by other searches, so as to implement the effective time division multiplexing of searching resources while ensuring the searching performance. Furthermore, the conventional searching technology is fully utilized based on the conventional multipath searcher, so that the implementation is simple and the implementation complexity is lowered.

It can be concluded from what described above that the embodiments of the present invention consider the discontinuous transmission of the DPCCH based on the conventional multipath searching technology and ensure the searching performance of the multipath searcher during the continuous and discontinuous transmissions of the DPCCH. Meanwhile, the effective time division multiplexing of the idle part of the AP can be implemented, the utilization efficiency of the integration resources of the multipath searcher is improved, and the implementation complexity is further lowered.

It should be noted that the embodiments of the present invention are also suitable for the situation of the continuous transmission of the DPCCH.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A multipath searching method, **characterized by** comprising:
judging that a terminal is in a Continuous Packet Connectivity (CPC) mode;
determining an Activity Period (AP) number of an AP according to parameters of the CPC mode, wherein the parameters comprise: a UE_DTX_cycle_1, a UE_DTX_cycle_2, a UE_DPCCH_burst_1 and a UE_DPCCH_burst 2, wherein the UE_DTX_cycle_2 is greater than the UE_DTX_cycle_1;
determining, in an integration period corresponding to the AP number, a correlation function of a Dedicated Physical Control Channel (DPCCH); and
carrying out a multipath searching according to the correlation function.

2. The method according to claim 1, **characterized in that** the step of determining the AP number of the AP according to the parameters of the CPC mode comprises:
setting an integration length of the AP as a smaller one of the UE_DPCCH_burst_1 and the UE_DPCCH_burst_2;
judging whether the UE_DTX_cycle_2 is greater than or equal to a commonly used AP;
if it is judged that the UE_DTX_cycle_2 is greater than or equal to the commonly used AP, setting the AP as the UE_DTX_cycle_2; if it is judged that the UE_DTX_cycle_2 is less than the commonly used AP, setting the AP as N times of UE_DTX_cycle_2, wherein N is a natural number more than 1, and the N times of UE_DTX_cycle_2 is greater than and the most approximate to the commonly used AP; and
looking up a set CPC parameter table to determine the AP number according to the integration length of the AP and the AP, wherein the CPC parameter table comprises a corresponding relation among a UE_DTX_cycle, a UE_DPCCH_burst and the AP number.

3. The method according to claim 1, **characterized in that** the step of determining the AP number of the AP according to the parameters of the CPC mode comprises:
setting an integration length of the AP as a smaller one of the UE_DPCCH_burst_1 and the UE_DPCCH_burst_2;
setting the AP as the UE_DTX_cycle_2; and
looking up a set CPC parameter table to determine the AP number according to the integration length of the AP and the AP, wherein the CPC parameter table comprises a corresponding relation among a UE_DTX_cycle, a UE_DPCCH_burst and the AP number.

4. The method according to claim 1, **characterized in that** before the step of determining, in the integration period corresponding to the AP number, the correlation function of the DPCCH, the method further comprises:
determining a discarding counting threshold according to the AP number and the UE_DTX_cycle_2; and
the step of carrying out the multipath searching according to the correlation function comprises:
judging, according to the discarding counting threshold, whether to process the correlation function, and if it is judged to process the correlation function, carrying out the multipath searching according to the correlation function.

5. The method according to claim 4, **characterized in that** the step of determining the discarding counting threshold according to the AP number and the UE_DTX_cycle_2 comprises:
judging whether the AP corresponding to the AP number is less than the UE_DTX_cycle_2 of the CPC mode;
if it is judged that the AP corresponding to the AP number is less than the UE_DTX_cycle_2 of the CPC mode, setting the discarding counting threshold as a quotient obtained by dividing the UE_DTX_cycle_2 by the AP corresponding to the AP number; and
if it is judged that the AP corresponding to the AP number is larger than or equal to the UE_DTX_cycle_2 of the CPC mode, setting the discarding counting threshold as 1.

6. The method according to claim 4, **characterized in that** the step of judging, according to the discarding counting threshold, whether to process the correlation function comprises:
updating a searching counting variable, wherein the searching counting variable is used for counting times of the multipath searching;
carrying out a modular operation on the updated searching counting variable and the discarding counting threshold; and
setting a value of the searching counting variable as a result of the modular operation, judging whether the value of the searching counting variable is 0, and if it is judged that the value of the searching counting variable is 0, processing the correlation function.

7. The method according to claim 6, **characterized in that** the step of updating the searching counting variable comprises:
setting the searching counting variable as 0 when the terminal switches from the UE_DTX_cycle_1 to the UE_DTX_cycle_2 of the CPC mode; and
updating the searching counting variable according to the times of the multipath searching.

8. A multipath searcher, **characterized by** comprising:
a judgment module, configured to judge that a terminal is in a Continuous Packet Connectivity (CPC) mode;
a discontinuous AP selector, configured to determine an Activity Period (AP) number of an AP according to parameters of the CPC mode, wherein the parameters comprise: a UE_DTX_cycle_1, a UE_DTX_cycle_2, a UE_DPCCH_burst_1 and a UE_DPCCH_burst 2, wherein the UE_DTX_cycle_2 is greater than the UE_DTX_cycle_1;
a multipath detection module, configured to determine, in an integration period corresponding to the AP number, a correlation function of a Dedicated Physical Control Channel (DPCCH); and
a multipath management module, configured to carry out a multipath searching according to the correlation function.

9. The multipath searcher according to claim 8, **characterized in that** the discontinuous AP selector comprises:
an integration length module, configured to set an integration length of the AP as a smaller one of the UE_DPCCH_burst_1 and the UE_DPCCH_burst_2;
an AP module, configured to judge whether the UE_DTX_cycle_2 is greater than or equal to a commonly used AP, set the AP as the UE_DTX_cycle_2 if it is judged that the UE_DTX_cycle_2 is greater than or equal to the commonly used AP, and set the AP as N times of UE_DTX_cycle_2 if it is judged that the UE_DTX_cycle_2 is less than the commonly used AP, wherein N is a natural number more than 1, and the N times of UE_DTX_cycle_2 is greater than and the most approximate to the commonly used AP; and
a determining module, configured to look up a set CPC parameter table to determine the AP number according to the integration length of the AP and the AP, wherein the CPC parameter table comprises a corresponding relation among a UE_DTX_cycle, a UE_DPCCH_burst and the AP number.

10. The multipath searcher according to claim 9, **characterized in that**
the discontinuous AP selector further comprises: a counting threshold module, configured to determine a discarding counting threshold according to the AP number and the UE_DTX_cycle_2;
the multipath management module is configured to judge, according to the discarding counting threshold, whether to process the correlation function, and carry out the multipath searching according to the correlation function if it is judged to process the correlation function.

11. The multipath searcher according to claim 10, **characterized in that** the counting threshold module comprises:
a threshold judgment module, configured to judge whether the AP corresponding to the AP number is less than the UE_DTX_cycle_2 of the CPC mode; and
a setting module, configured to set the discarding counting threshold as a quotient obtained by dividing the UE_DTX_cycle_2 by the AP corresponding to the AP number if a judgment result of the threshold judgment module is that the AP corresponding to the AP number is less than the UE_DTX_cycle_2 of the CPC mode, and set the discarding counting threshold as 1 if the judgment result of the threshold judgment module is that the AP corresponding to the AP number is larger than or equal to the UE_DTX_cycle_2 of the CPC mode.

12. The multipath searcher according to claim 10, **characterized in that** the multipath management module comprises:
an updating module, configured to update a searching counting variable, wherein the searching counting variable is used for counting times of the multipath searching;
a modular operation module, configured to carry out a modular operation on the updated searching counting variable and the discarding counting threshold; and
an execution module, configured to set a value of the searching counting variable as a result of the modular operation, judge whether the value of the searching counting variable is 0, and process the correlation function if it is judged that the value of the searching counting variable is 0.
